# EUROPEAN PATENT SPECIFICATION

(11) **EP 2 953 306 B1**
(45) Date of publication and mention of the grant of the patent: **08.11.2017**
(21) Application number: 15157521.4
(22) Date of filing: 04.03.2015
(51) Int. Cl.: H04L 25/03, H04L 27/26

(54) **METHOD FOR CANCELLING INTERSYMBOL AND INTERCARRIER INTERFERENCE IN OFDM**
VERFAHREN ZUR UNTERDRÜCKUNG DER INTERSYMBOLINTERFERENZ UND DER INTERTRÄGERINTERFERENZ IN OFDM
PROCÉDÉ D'ANNULATION D'INTERFÉRENCE INTERSYMBOLE ET INTERPORTEUSE

(30) Priority: 04.06.2014 CN 201410245859; 18.09.2014 CN 201410477768
(43) Date of publication of application: 09.12.2015
(73) Proprietor: ALi Corporation, Hsinchu City 300 (TW)
(72) Inventor: Yang, Yong, 200233 Shanghai (CN)
(74) Representative: Viering, Jentschura & Partner mbB Patent- und Rechtsanwälte

(56) References cited:
- US-A1- 2009 161 779
- US-A1- 2012 087 432
- US-A1- 2012 307 944
- NGUYEN V D ET AL: "Combination of interference cancellation with channel estimation for OFDM transmission over mobile radio channels", EUROPEAN TRANSACTIONS ON TELECOMMUNICATIONS, WILEY & SONS, CHICHESTER, GB, vol. 19, no. 1, 1 January 2008 (2008-01-01), pages 85-99, XP001511310, ISSN: 1124-318X, DOI: 10.1002/ETT.1237
- Yi-Jen Chiu, Chien-Sheng Chen, Ting-Wei Chang: "Channel Estimation and ISI/ICI Cancellation for MIMO-OFDM Systems with Insufficient Cyclic Prefix" In: Jie Zhou: "Complex sciences", 1 January 2009 (2009-01-01), Springer, Germany, XP002749241, pages 1203-1212, * paragraph [0003] *

## Description

### BACKGROUND

### 1. Technical Field

The present disclosure relates to a Digital Video Broadcasting (DVB) system; in particular, to a method for processing and Orthogonal Frequency Division Multiplexing (OFDM) signal used in a receiver of the DVB system.

### 2. Description of Related Art

In the DVB standard, to avoid Inter-Symbol Interference (ISI), a Guard Interval (GI) is inserted between two consecutive OFDM signals. The longer the length of the GI is, the lower the channel efficiency is. Generally, a GI with a shortest length is selected to enhance the channel efficiency, and a signal processing procedure is performed to increase the ISI resistance is increased.

In Digital Video Broadcasting-Second Generation Terrestrial (DVB-T2) standard, when the receiver of the DVB system processes the OFDM signal on a frequency domain to eliminate ISI and Inter-Channel Interference (ICI), the estimation of P1 pilot signal on the frequency domain is inevitable under some conditions. The current DVB-T2 standard merely defines the generation of the P1 pilot signal on the time domain rather than the estimation of the P1 pilot signal on the frequency domain.

NGUYEN V D ET AL: "Combination of interference cancellation with channel estimation for OFDM transmission over mobile radio channels", EUROPEAN TRANSACTIONS ON TELECOMMUNICATIONS, WILEY & SONS, CHICHESTER, GB, vol. 19, no. 1, 1 January 2008 discloses a method, which combines interference cancellation with channel estimation for an orthogonal frequency division multiplexing (OFDM) system in the case of insufficient guard interval (GI) length. To avoid the problem of causing additional errors of conventional cancellers in the presence of strong additive noise, the proposed cancellation scheme uses the channel state information (CSI) and the so called remodulation technique to reproduce the interference distortions.

### SUMMARY

An exemplary embodiment of the present disclosure provides a method for processing an OFDM signal for eliminating ISI and ICI. A first signal and a second signal are temporally stored. An OFDM signal on a frequency domain, the second signal is updated to be the OFDM signal on a frequency domain is received, and the first signal is updated to be the last received and processed second signal. A channel is estimated according to the first signal and the second signal, and a channel estimation result is generated. When a specific frame enable signal or a specific pilot enable signal is false, an ISI result is estimated according to the first signal and the channel estimation result. When the specific frame enable signal and the specific pilot enable signal are true, the ISI result is estimated according to a specific frequency domain pilot signal and the channel estimation result. The second signal is updated according to the ISI result. A first ICI result is estimated according to the second signal and the channel estimation result. The second ICI result is estimated according to the second signal, the first ICI result, and the channel estimation result. The second signal is updated according to the second ICI result to give the last received and processed second signal. The first signal is equalized, and the equalized first signal is output.

Another exemplary embodiment of the present disclosure provides a method for processing an OFDM signal for eliminating ISI and ICI. A first signal and a second signal are temporally stored. Receiving an OFDM signal on a frequency domain, the second signal is updated to be the OFDM signal on a frequency domain and the first signal is updated to be the last received and processed second signal. A channel is estimated according to the first signal and the second signal, and a channel estimation result is generated. When a specific frame enable signal or a specific pilot enable signal is false, an ISI result is estimated according to the second signal and the channel estimation result. When the specific frame enable signal and the specific pilot enable signal are true, the ISI result is estimated according to a specific frequency domain pilot signal and the channel estimation result. The first signal is updated according to the ISI result. A first ICI result is estimated according to the first signal and the channel estimation result. The second ICI result is estimated according to the first signal, the first ICI result, and the channel estimation result. The first signal is updated according to the second ICI result to give the last received and processed second signal or updating the first signal according the second ICI result. The first signal is equalized, and the equalized first signal is output.

To sum up, the method for processing the OFDM signal provided by the exemplary embodiment of the present disclosure can eliminate the ISI and ICI.

In order to further understand the techniques, means and effects of the present disclosure, the following detailed descriptions and appended drawings are hereby referred, such that, through which, the purposes, features and aspects of the present disclosure can be thoroughly and concretely appreciated. However, the appended drawings are merely provided for reference and illustration, without any intention to be used for limiting the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a block diagram of a receiver according to one exemplary embodiment of the present disclosure.
FIG. 2 is a block diagram of an equalization and decision circuit according to one exemplary embodiment of the present disclosure.
FIG. 3 is a block diagram of a post-echo processing circuit according to one exemplary embodiment of the present disclosure.
FIG. 4 is a flow chart of a method for processing an OFDM signal with post-echo processing according to one exemplary embodiment of the present disclosure.
FIG. 5 is a block diagram of a pre-echo processing circuit according to one exemplary embodiment of the present disclosure.
FIG. 6 is a flow chart of a method for processing an OFDM signal with pre-echo processing according to one exemplary embodiment of the present disclosure.
FIG. 7 is a block diagram of a device for estimating a specific frequency domain pilot signal according to one exemplary embodiment of the present disclosure.
FIG. 8 is a flow chart of a method for estimating a specific frequency domain pilot signal according to one exemplary embodiment of the present disclosure.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or similar parts.

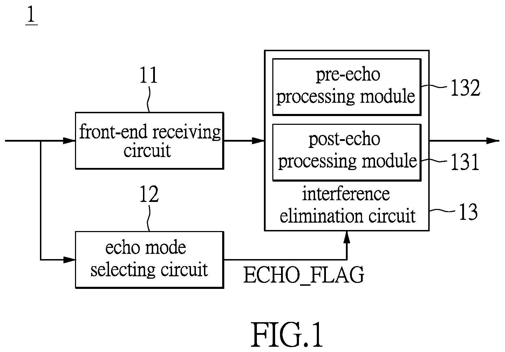

Referring to FIG. 1, FIG. 1 is a block diagram of a receiver according to one exemplary embodiment of the present disclosure. A receiver 1 can be used in a DVB system adopting DVB-T2 standard, and the present disclosure is not limited thereto. The receiver 1 comprises a front-end receiving circuit 11, an echo mode selecting circuit 12, and an interference elimination circuit 13, wherein the echo mode selecting circuit 12 is electrically coupled to the interference elimination circuit 13, and the interference elimination circuit 13 is electrically coupled to the front-end receiving circuit.

The front-end receiving circuit 11 is used to receive an OFDM signal on a time domain, and remove a GI of the OFDM signal on the time domain. Then, the front-end receiving circuit 11 is used to perform a Fast Fourier Transformation (FFT) on the OFDM signal on the time domain after the GI of the of the OFDM signal on the time domain is removed, so as to obtain an OFDM signal on a frequency domain.

The echo mode selecting circuit 12 is used to output an echo mode signal ECHO_FLAG, and the echo mode signal ECHO_FLAG is used to indicate the interference elimination circuit 13 should adopt a post-echo processing module 131 or a pre-echo processing module 132 to eliminate ISI and ICI of the OFDM signal on the frequency domain. The echo mode signal ECHO_FLAG output by the echo mode selecting circuit 12 can be determined by the user; or alternatively, the echo mode selecting circuit 12 determines echo mode signal ECHO_FLAG according an actual channel state which is obtained through detection of the OFDM signal on the time domain.

The interference elimination circuit 13 comprises at least one of circuits to configure to the post-echo processing module 131 and the pre-echo processing module 132. In the exemplary embodiment, the post-echo processing module 131 and the pre-echo processing module 132 can use some circuit(s) in common, or can be two modules independent to each other. Even, the post-echo processing module 131 and the pre-echo processing module 132 can be implemented by one Digital Signal Processing (DSP) circuit, which processes the OFDM signal on the frequency domain to eliminate the ISI and ICI of the OFDM signal on the frequency domain according to programmed codes.

The interference elimination circuit 13 can have a memory device, such as Static Radom Access Memory (SRAM) to temporally store a first signal and a second signal. After the interference elimination circuit 13 receives the OFDM signal on the frequency domain, the second signal is updated to be the OFDM signal on the frequency domain, and the first signal is updated to be the original second signal. Next, the interference elimination circuit 13 estimate a channel according to the first and second signals to generate a channel estimation result, and that is, the interference elimination circuit 13 uses to OFDM signals on the frequency domain (the currently received and processed OFDM signal on the frequency domain and the last received OFDM signal on the frequency domain) to generate the channel estimation result. It is noted that, the implementation for estimating the channel according to the first and second signals can be one of the channel estimation methods which utilize two signals, and the present disclosure is not limited thereto.

As mentioned above, the receiver 1 can used in the DVB system adopting DVB-T2 standard, and in the DVB system adopting DVB-T2 standard, a super frame comprises a plurality of T2 frames and a plurality of Feature Extension Frame (FEF) parts. Each T2 frame has a plurality of the OFDM signals for conveying pilot signals (including P1 and P2 pilot signals) and a plurality of the OFDM signals for conveying data (including normal data and Frame Closing (FC) data), and the FEF part has one OFDM signal for conveying a P1 pilot signal and a plurality of the OFDM signals for conveying FEF data. Thus, when the frame of the received OFDM signal on the frequency domain is the T2 frame, and the received OFDM signal on the frequency domain is the P1 pilot signal on the frequency domain, the P1 pilot signal on the frequency domain acts as the specific frequency domain pilot signal for estimating an ISI result. It is noted that, the implementation for estimating the ISI results can be one of the ISI result estimation methods, and the present disclosure is not limited thereto.

In the exemplary embodiment, a specific frame enable signal and a specific pilot enable signal are used to respectively indicate whether the frame of the received OFDM signal on the frequency domain is the T2 frame, and whether the received OFDM signal on the frequency domain is the P1 pilot signal on the frequency domain. When the specific frame enable signal and the specific pilot enable signal are true, i.e. that the frame of the received OFDM signal on the frequency domain is the T2 frame and the received OFDM signal on the frequency domain is the P1 pilot signal on the frequency domain is determined, the interference elimination circuit 13 estimates the ISI result according to the P1 pilot signal on the frequency domain and the channel estimation result.

By contrast, when the specific frame enable signal or the specific pilot enable signal is false, i.e. that the frame of the received OFDM signal on the frequency domain is not the T2 frame or the received OFDM signal on the frequency domain is not the P1 pilot signal on the frequency domain is determined, the interference elimination circuit 13 estimates the ISI result according to the first or second signal and the channel estimation result, wherein whether the first or second signal is used for estimating the ISI result is determined according to the echo mode signal ECHO_FLAG. When the echo mode signal ECHO_FLAG indicates the interference elimination circuit 13 should adopt the post-echo processing module 131, the interference elimination circuit 13 utilizes the first signal and the channel estimation result to generate the ISI result. When the echo mode signal ECHO_FLAG the interference elimination circuit 13 should adopt the pre-echo processing module 132, the interference elimination circuit 13 utilizes the second signal and the channel estimation result to generate the ISI result.

After the ISI result is obtained, the interference elimination circuit 13 updates the second or first signal according to the ISI result, wherein whether the first or second signal is updated according to the ISI result is determined according to the echo mode signal ECHO_FLAG. When the echo mode signal ECHO_FLAG indicates the interference elimination circuit 13 should adopt the post-echo processing module 131, the second signal is updated to be a subtraction result which the original second signal subtracts the ISI result, and the first signal remains intact. When the echo mode signal ECHO_FLAG the interference elimination circuit 13 should adopt the pre-echo processing module 132, the first signal is updated to be a subtraction result which the original first signal subtracts the ISI result, and the second signal remains intact.

Next, the interference elimination circuit 13 estimate a first ICI result according to the second or first signal and the channel estimation result, wherein whether the second or first signal is utilized to estimate the first ICI result is determined according to the echo mode signal ECHO_FLAG. When the echo mode signal ECHO_FLAG indicates the interference elimination circuit 13 should adopt the post-echo processing module 131, the interference elimination circuit 13 utilizes the second signal and the channel estimation result to generate the first ICI result. When the echo mode signal ECHO_FLAG the interference elimination circuit 13 should adopt the pre-echo processing module 132, the interference elimination circuit 13 utilizes the first signal and the channel estimation result to generate the first ICI result.

Then, the interference elimination circuit 13 estimates the second ICI result according to the second or first signal, the first ICI result, and the channel estimation result, wherein whether the second or first signal is utilized to estimate the second ICI result is determined according to the echo mode signal ECHO_FLAG. When the echo mode signal ECHO_FLAG indicates the interference elimination circuit 13 should adopt the post-echo processing module 131, the interference elimination circuit 13 utilizes the second signal, the first ICI result, and the channel estimation result to estimate the second ICI result. When the echo mode signal ECHO_FLAG the interference elimination circuit 13 should adopt the pre-echo processing module 132, the interference elimination circuit 13 utilizes the first signal, the first ICI result, and the channel estimation result to estimate the second ICI result. It is noted the implementation for estimating the first or second ICI result can be one of the ICI result estimation methods, and the present disclosure is not limited thereto.

Next, the interference elimination circuit 13 updates the second or first signal according to the second ICI result, wherein whether the second or first signal is updated is determined according to the echo mode signal ECHO_FLAG. When the echo mode signal ECHO_FLAG indicates the interference elimination circuit 13 should adopt the post-echo processing module 131, the interference elimination circuit 13 updates the second signal to be a subtraction result which the second signal subtracts the second ICI result. When the echo mode signal ECHO_FLAG the interference elimination circuit 13 should adopt the pre-echo processing module 132, the interference elimination circuit 13 updates the first signal be a calculation result which the first signal subtracts the first ICI result and adds the second ICI result.

Next, the interference elimination circuit 13 equalizes the first signal, and outputs the equalized first signal. Through mentioned processing, the received OFDM signal on the frequency domain can be converted to the equalized first signal after iterations are executed, and the ISI and ICI can be thus eliminated.

It is noted that, before each of the ISI result, the first ICI result, and the second ICI result are generated, the first or second signal is equalized and decided, so as to obtain the equalized and decided first or second signal. Next, the equalized and decided first or second signal is utilized to estimate each of the ISI result, the first ICI result, and the second ICI result. In other words, the method for processing the OFDM signal used in the interference elimination circuit 13 adopts reliable region decision to guarantee the precisions of the ISI result, the first ICI result, and the second ICI result. The details of the equalization and decision are illustrated in latter descriptions, and omitted herein.

It is known that, the method for processing the OFDM signal used in the interference elimination circuit 13 processes the OFDM signal merely on the frequency domain, and thus the executions of several Inversed FFTs (IFFTs) and FFTs can be avoided. In addition, under some specific condition, the P1 pilot signal on the frequency domain may also induce interference, and thus the interference elimination circuit 13 can estimate the P1 pilot signal on the frequency domain by itself, so as to generate the ISI result. Furthermore, the method for processing the OFDM signal performs two iterations on the OFDM signal on the frequency domain, utilizes two OFDM signals on the frequency domain to estimate the channel, and adopts reliable region decision and pilot aiding decision, such that the ISI and ICI can be efficiently eliminated, and the system performance can be enhanced. Moreover, the method for processing the OFDM signal adopts the pre-echo or post-echo processing, and partial components can be used in both of the pre-echo and post-echo processing, such that the cost of hardware increases little.

In the exemplary embodiment, the post-echo processing module 131 and the pre-echo processing module 132 can have an equalization and decision circuit, such that before each of the ISI result, the first ICI result, and the second ICI result are generated, the first or second signal is equalized and decided, and then the equalized and decided first or second signal is utilized to estimate each of the ISI result, the first ICI result, and the second ICI result. One implementation of equalization and decision circuit is illustrated as follows, and the present disclosure is not limited thereto.

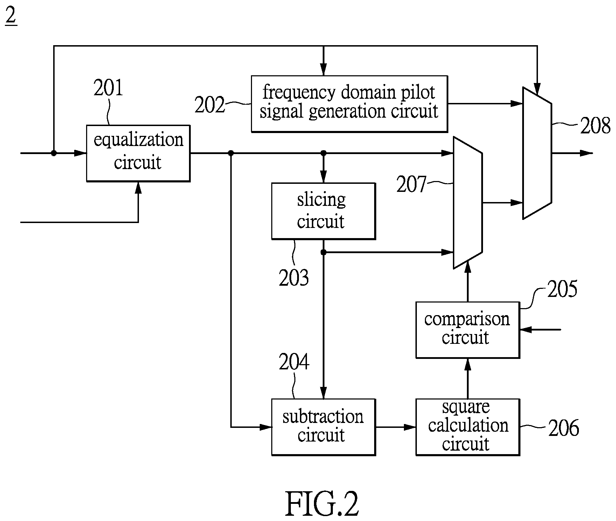

Referring to FIG. 2, FIG. 2 is a block diagram of an equalization and decision circuit according to one exemplary embodiment of the present disclosure. The equalization and decision circuit 2 comprises an equalization circuit 201, a frequency domain pilot signal generation circuit 202, a slicing circuit 203, a subtraction circuit 204, a comparison circuit 205, a square calculation circuit 205, and multiplexers 207, 208. The equalization circuit 201 is electrically coupled to the subtraction circuit 204, the slicing circuit 203, and the multiplexer 207, the slicing circuit 203 is electrically coupled to the multiplexer 206 and the subtraction circuit 204, and the subtraction circuit 204 is electrically coupled to the square calculation circuit 206. The comparison circuit 205 is electrically coupled to the multiplexer 207, the multiplexer 207 is electrically coupled to the multiplexer 208, and the frequency domain pilot signal generation circuit 202 is electrically coupled to the multiplexer 208.

The equalization circuit 201 receives an input signal and a channel estimation result, and equalizes the input signal according to the channel estimation result, wherein the input signal can be one of the first signal, the second signal, the processed first signal, and the processed second signal. The slicing circuit 203 output a decided input signal according to the equalized input signal. The subtraction circuit 204 subtracts decided input signal from the input signal to generate a difference (i.e. vector actually) of the input signal and the decided input signal.

The square calculation circuit 206 receives the difference output from the subtraction circuit 204, and calculates the square norm value (i.e. the square norm value of the vector actually) of the difference. The comparison circuit 205 compares the threshold and the square norm value of the difference output from the square calculation circuit 206, and generates a comparison result accordingly. The multiplexer 207 outputs the equalized input signal or the decided input signal according to the comparison result. When the square norm value of the difference is larger than the threshold, the multiplexer 207 outputs the equalized input signal. When the square norm value of the difference is less than or equal to the threshold, the multiplexer 207 outputs the decided input signal.

The frequency domain pilot signal generation circuit 202 receives the input signal, and generates the corresponding pilot signal on the frequency domain. According to whether the input signal is the pilot signal on the frequency domain, the multiplexer 208 outputs the output signal from the multiplexer 207 or the pilot signal on the frequency domain, which is generated by the frequency domain pilot signal generation circuit 202. When the input signal is the pilot signal on the frequency domain, the multiplexer 208 outputs the pilot signal on the frequency domain, which is generated by the frequency domain pilot signal generation circuit 202, as the equalized and decided input signal. When the input signal is not the pilot signal on the frequency domain, the multiplexer 208 outputs the output signal output from the multiplexer 207, as the equalized and decided input signal.

Next, one implementation of the post-echo processing module is illustrated as follows. However, it is noted that the following implementation of the post-echo processing module is not used to limit the present disclosure.

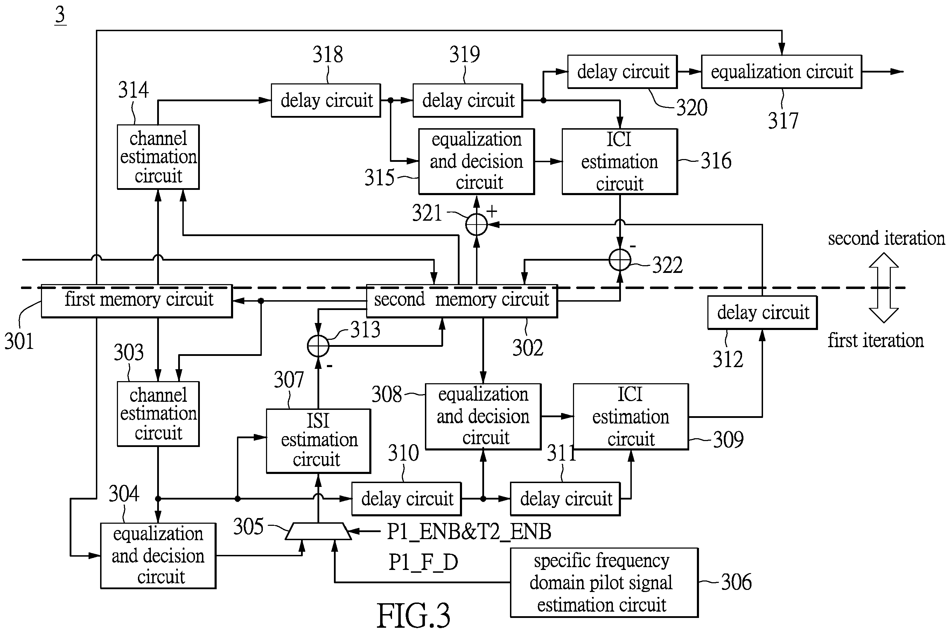

Referring to FIG. 3, FIG. 3 is a block diagram of a post-echo processing circuit according to one exemplary embodiment of the present disclosure. The post-echo processing module 3 comprises a first memory circuit 301, a second memory circuit 302, channel estimation circuits 303. 314, equalization and decision circuits 304, 308, 315, a multiplexer 305, a specific frequency domain pilot signal estimation circuit 306, an ISI estimation circuit 307, subtraction circuits 313, 322, ICI estimation circuits 309, 316, delay circuits 310-312, 318-320, an equalization circuit 317, and an addition circuit 321.

In the exemplary embodiment, the first memory circuit 301 is electrically coupled to the second memory circuit 302, and the channel estimation circuit 303 is electrically coupled to the first memory circuit 301 and the second memory circuit 302. The equalization and decision circuit 304 is electrically coupled to the channel estimation circuit 303 and the first memory circuit 301, and the multiplexer 305 is electrically coupled to the channel estimation circuit 303 and the specific frequency domain pilot signal estimation circuit 306. The ISI estimation circuit 307 is electrically coupled to the channel estimation circuit 303 and the multiplexer 305, and the delay circuit 310 is electrically coupled to the channel estimation circuit 303. The delay circuit 311 is electrically coupled to the delay circuit 310, and the equalization and decision circuit 308 is electrically coupled to the delay circuit 310 and the second memory circuit 302. The subtraction circuit 313 is electrically coupled to the ISI estimation circuit 307 and the second memory circuit 313. The ICI estimation circuit 309 is electrically coupled to the delay circuit 311 and the equalization and decision circuit 308, and the delay circuit 312 is electrically coupled to the ICI estimation circuit 309.

The channel estimation circuit 314 is electrically coupled to the first memory circuit 301 and the second memory circuit 302, and the addition circuit 321 is electrically coupled to the second memory circuit 302 and the delay circuit 312. The subtraction circuit 322 is electrically coupled to the 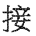 second memory circuit 302 and the ICI estimation circuit 316, and the delay circuit 318 is electrically coupled to the channel estimation circuit 314. The delay circuit 319 is electrically coupled to the delay circuit 318, and the equalization and decision circuit 315 is electrically coupled to the addition circuit 321 and the delay circuit 318. The delay circuit 320 is electrically coupled to the delay circuit 319. The equalization circuit 317 is electrically coupled to the first memory circuit 301 and the delay circuit 320, and the ICI estimation circuit 316 is electrically coupled to the equalization and decision circuit 315 and the delay circuit 319.

It is noted that, connections and implementations of components in the post-echo processing module 3 are not used to limit the present disclosure. For example, through utilization of other multiplexer, the person with ordinary skill in the art can know that some partial components used in the first second iterations are identical to each other, thus decreasing the hardware cost.

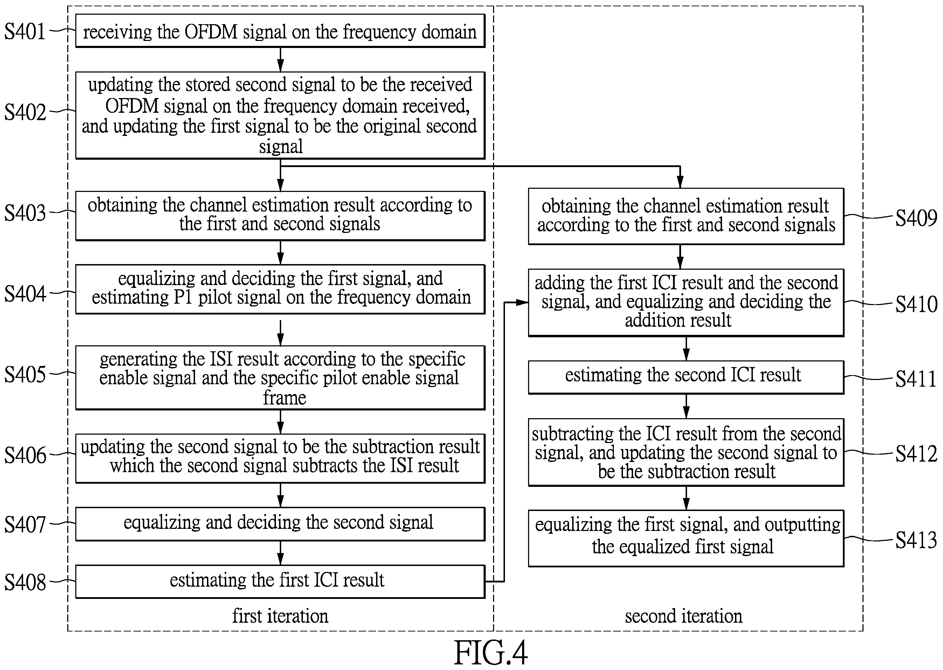

Referring to FIG. 3 and FIG. 4, FIG. 4 is a flow chart of a method for processing an OFDM signal with post-echo processing according to one exemplary embodiment of the present disclosure. The method for processing the OFDM signal with post-echo processing in FIG. 4 can be executed in the post-echo processing module 3 of FIG. 3, and it is noted that, the method for processing the OFDM signal with post-echo processing in FIG. 4 may be executed in other implemented post-echo processing module. To reduce the redundant descriptions, functions of components in FIG. 3 and steps of FIG. 4 are simultaneously described as follows.

In FIG. 4, the first iteration comprises steps S401-S408. Firstly, at step S401, the post-echo processing module 3 receives the OFDM signal on the frequency domain. Then, at step S402, the second memory circuit 302 updates the stored second signal to be the OFDM signal on the frequency domain received by the post-echo processing module 3, and the first memory circuit 301 updates stored first signal to be the original second signal stored in the second memory circuit 302. Next at step S403, the channel estimation circuit 303 receives the first and second signals, and estimates the channel according to the first and second signals to generate the channel estimation result. Then, at step S404, the equalization and decision circuit 304 equalizes and decides the first signal according to the channel estimation result to generate the equalized and decided first signal, and the specific frequency domain pilot signal estimation circuit 306 generates a specific frequency domain pilot signal P1_F_D, for example the P1 pilot signal on the frequency domain. The implementation for equalizing and deciding the first signal can be known by the described details related to FIG. 2, thus omitting the redundant descriptions. Moreover, the implementation for generating the specific frequency domain pilot signal P1_F_D relates to the system standard, for example, the generation of the P1 pilot signal on the time domain and related block diagram are specified in the DVB-T2 standard, and the specific frequency domain pilot signal estimation circuit 306 can estimate the P1 pilot signal on the frequency domain based on the P1 pilot signal on the time domain. The details are illustrated in the latter descriptions, thus omitting the details herein.

At step S405, the multiplexer 305 outputs the specific frequency domain pilot signal P_F_D or the equalized and decided first signal according to the specific frame enable signal and the specific pilot enable signal, and the ISI estimation circuit 307 receives the specific frequency domain pilot signal P1_F_D or the equalized and decided first signal according to the specific frame enable signal and the specific pilot enable signal, so as to generate the ISI result based on the channel estimation result accordingly. To put it concretely, when the specific frame enable signal (for example, T2 frame enable signal T2_ENB) and the specific pilot enable signal (for example, P1 pilot signal enable signal P1_ENB) are true, the ISI estimation circuit 307 estimates the ISI result according to the specific frequency domain pilot signal P1_F_D and the channel estimation result. When the specific frame enable signal or the specific pilot enable signal is false, the ISI estimation circuit 307 estimates the ISI result according to the equalized and decided first signal and the channel estimation result.

Next, at step S406, the subtraction circuit 313 subtracts the ISI result from the second signal, and the second memory circuit 302 updates the second signal to be the subtraction result which the second signal subtracts the ISI result. Then, at step S407, the delay circuit 310 delays the channel estimation result, and sends the delayed channel estimation result to the equalization and decision circuit 308 and the delay circuit 311, and the equalization and decision circuit 308 receives the second signal, and equalizes and decides the second signal according to the channel estimation result to generate the equalized and decided second signal. The implementation for equalizing and deciding the second signal can be known by the described details related to FIG. 2, thus omitting the redundant descriptions.

Next, at step S408, the delay circuit 311 delays the received channel estimation result, and sends the delayed channel estimation result to the ICI estimation circuit 309, and the ICI estimation circuit 309 generates the first ICI result according to the equalized and decided second signal and the channel estimation result. Next, the delay circuit 312 delays the received first ICI result, and sends the delayed first ICI result to the addition circuit 321. Herein, the first iteration last estimates the first ICI result, and the second signal stored in the second memory circuit 302 has subtracted the ISI result.

In FIG. 4, the second iteration comprises steps S409-S413. At step S409, the channel estimation circuit 303 estimates the channel according to the first signal and the second signal stored in the second memory circuit 302, which has not subtracted the ISI result, so as to generate the channel estimation result. In other words, the channel estimation result generated in step S409 is the same as that in step S403.

At step S410, the addition circuit 321 adds the first ICI result and the second signal stored in the second memory circuit 302, which has subtracted the ISI result. The delay circuit 318 delays the channel estimation result output from channel estimation circuit 314, and sends the delayed channel estimation result to the equalization and decision circuit 315 and the delay circuit 319, and the equalization and decision circuit 315 equalizes and decides addition result according to the channel estimation result to generate the equalized and decided addition result. The implementation for equalizing and deciding the addition result can be known by the described details related to FIG. 2, thus omitting the redundant descriptions.

Next, at step S411, the delay circuit 319 delays the received channel estimation result, and sends the delayed channel estimation result to the ICI estimation circuit 316 and the delay circuit 320, and the ICI estimation circuit 316 estimates the second ICI result according to the equalized and decided addition result and the channel estimation result. Then, at step S412, the subtraction circuit 322 subtracts the ICI result from the second signal, and the second memory circuit 302 updates the stored second signal to be a subtraction result which the second signal subtracts the second ICI result. At step S413, the delay circuit 320 delays the received channel estimation result, and send the delayed channel estimation result to the equalization circuit 317, and the equalization circuit 317 equalizes the first signal stored in the first memory circuit 301 according to the channel estimation result.

Herein, the second iteration last estimates the second ICI result, and the second signal stored in the second memory circuit 302 has subtracted not only the ISI result but also the ICI results (i.e. the first and second ICI results). In addition, the first signal stored in the first memory circuit 301 in fact is the last received and processed second signal, and thus the currently output equalized first signal also has as subtracted the ISI and the ICI results. Accordingly, the method for processing the OFDM signal in FIG. 4 executed in the post-echo processing module 3 can efficiently eliminate the ISI and ICI.

Next, one implementation of the pre-echo processing module is illustrated as follows. However, it is noted that the following implementation of the pre-echo processing module is not used to limit the present disclosure.

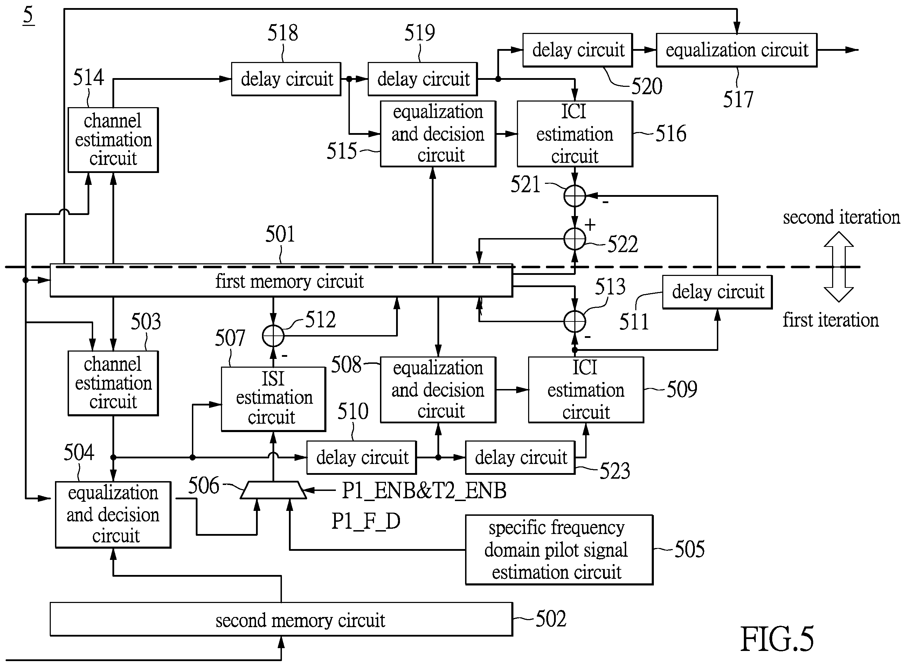

Referring to FIG. 5, FIG. 5 is a block diagram of a pre-echo processing circuit according to one exemplary embodiment of the present disclosure. The post-echo processing module 5 comprises a first memory circuit 501, a second memory circuit 502, channel estimation circuits 503. 514, equalization and decision circuits 504, 508, 515, a specific frequency domain pilot signal estimation circuit 505, a multiplexer 506, an ISI estimation circuit 507, ICI estimation circuits 509, 516, subtraction circuits 512, 513, 521, delay circuits 510, 511, 523, 518-320, an equalization circuit 517, and an addition circuit 522.

In the exemplary embodiment, the first memory circuit 501 is electrically coupled to the second memory circuit 502 and the subtraction circuit 513, and the channel estimation circuit 503 is electrically coupled to the first memory circuit 501 and the second memory circuit 502. The equalization and decision circuit 504 is electrically coupled to the channel estimation circuit 503 and the second memory circuit 502, and the multiplexer 506 is electrically coupled to the channel estimation circuit 504 and the specific frequency domain pilot signal estimation circuit 505. The ISI estimation circuit 507 is electrically coupled to the channel estimation circuit 503 and the multiplexer 506, and the delay circuit 510 is electrically coupled to the channel estimation circuit 503. The delay circuit 523 is electrically coupled to the delay circuit 510, and the equalization and decision circuit 508 is electrically coupled to the delay circuit 310 and the first memory circuit 501. The delay circuit 523 is electrically coupled to the delay circuit 510, the subtraction circuit 513 is electrically coupled to the ISI estimation circuit 509, and the subtraction circuit 512 is electrically coupled to the first memory circuit 501 and the ISI estimation circuit 507. The ICI estimation circuit 509 is electrically coupled to the delay circuit 523 and the equalization and decision circuit 508, and the delay circuit 511 is electrically coupled to the ICI estimation circuit 509.

The channel estimation circuit 514 is electrically coupled to the first memory circuit 501 and the second memory circuit 502, and the addition circuit 522 is electrically coupled to the first memory circuit 501 and the subtraction circuit 521. The subtraction circuit 521 is electrically coupled to the delay circuit 511 and the ICI estimation circuit 516, and the delay circuit 518 is electrically coupled to the channel estimation circuit 514. The delay circuit 519 is electrically coupled to the delay circuit 518, and the equalization and decision circuit 515 is electrically coupled to the first memory circuit 501 and the delay circuit 518. The delay circuit 520 is electrically coupled to the delay circuit 519. The equalization circuit 517 is electrically coupled to the first memory circuit 501 and the delay circuit 520, and the ICI estimation circuit 516 is electrically coupled to the equalization and decision circuit 515 and the delay circuit 519.

It is noted that, connections and implementations of components in the pre-echo processing module 5 are not used to limit the present disclosure. For example, through utilization of other multiplexer, the person with ordinary skill in the art can know that some partial components used in the first second iterations are identical to each other, thus decreasing the hardware cost.

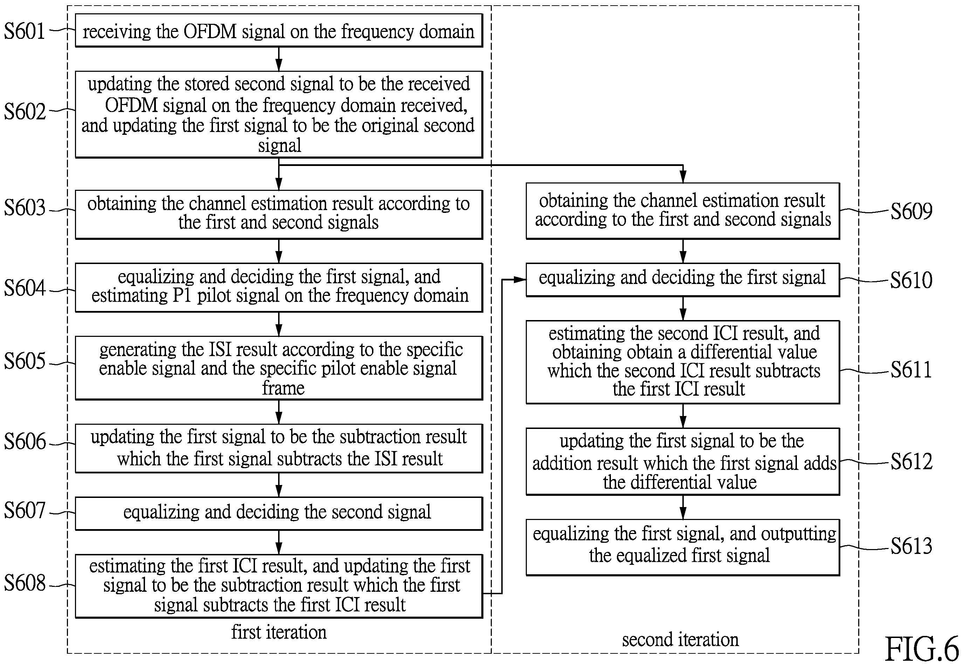

Referring to FIG. 5 and FIG. 6, FIG. 6 is a flow chart of a method for processing an OFDM signal with pre-echo processing according to one exemplary embodiment of the present disclosure. The method for processing the OFDM signal with post-echo processing in FIG. 6 can be executed in the pre-echo processing module 5 of FIG. 5, and it is noted that, the method for processing the OFDM signal with post-echo processing in FIG. 6 may be executed in other implemented pre-echo processing module. To reduce the redundant descriptions, functions of components in FIG. 5 and steps of FIG. 6 are simultaneously described as follows.

In FIG. 6, the first iteration comprises steps S601-S608. Firstly, at step S601, the post-echo processing module 5 receives the OFDM signal on the frequency domain. Then, at step S602, the second memory circuit 502 updates the stored second signal to be the OFDM signal on the frequency domain received by the pre-echo processing module 5, and the first memory circuit 501 updates stored first signal to be the original second signal stored in the second memory circuit 502. Then, at step S603, the channel estimation circuit 503 receives the first and second signals, and estimates the channel according to the first and second signals to generate the channel estimation result. At step S604, the equalization and decision circuit 504 equalizes and decides the second signal according to the channel estimation result to generate the equalized and decided second signal, and the specific frequency domain pilot signal estimation circuit 505 generates a specific frequency domain pilot signal P1_F_D, for example the P1 pilot signal on the frequency domain. The implementation for equalizing and deciding the second signal can be known by the described details related to FIG. 2, thus omitting the redundant descriptions. Moreover, the implementation for generating the specific frequency domain pilot signal P1_F_D relates to the system standard, for example, the generation of the P1 pilot signal on the time domain and related block diagram are specified in the DVB-T2 standard, and the specific frequency domain pilot signal estimation circuit 505 can estimate the P1 pilot signal on the frequency domain based on the P1 pilot signal on the time domain. The details are illustrated in the latter descriptions, thus omitting the details herein.

At step S605, the multiplexer 506 outputs the specific frequency domain pilot signal P1_F_D or the equalized and decided second signal according to the specific frame enable signal and the specific pilot enable signal, and the ISI estimation circuit 507 receives the specific frequency domain pilot signal P1_F_D or the equalized and decided second signal according to the specific frame enable signal and the specific pilot enable signal, so as to generate the ISI result based on the channel estimation result accordingly. To put it concretely, when the specific frame enable signal and the specific pilot enable signal are true, the ISI estimation circuit 507 estimates the ISI result according to the specific frequency domain pilot signal P1_F_D and the channel estimation result. When the specific frame enable signal or the specific pilot enable signal is false, the ISI estimation circuit 507 estimates the ISI result according to the equalized and decided second signal and the channel estimation result.

Next, at step S606, the subtraction circuit 512 subtracts the ISI result from the first signal, and the first memory circuit 501 updates the first signal to be the subtraction result which the first signal subtracts the ISI result. Then, at step S607, the delay circuit 510 delays the channel estimation result, and sends the delayed channel estimation result to the equalization and decision circuit 508 and the delay circuit 523, and the equalization and decision circuit 508 receives the first signal, and equalizes and decides the first signal according to the channel estimation result to generated the equalized and decided first signal. The implementation for equalizing and deciding the first signal can be known by the described details related to FIG. 2, thus omitting the redundant descriptions.

Next, at step S608, the delay circuit 523 delays the received channel estimation result, and sends the delayed channel estimation result to the ICI estimation circuit 509, and the ICI estimation circuit 509 generates the first ICI result according to the equalized and decided first signal and the channel estimation result. Then, the subtraction circuit 513 and the delay circuit 511 receive the first ICI result, the delay circuit 511 delays the first ICI result, and sends the delayed first ICI result to the subtraction circuit 521, the subtraction circuit 513 subtracts the first ICI result from the first signal, and the first memory circuit 501 updates the stored first signal to be the subtraction result which the first signal subtracts the first ICI result. Herein, the first iteration last estimates the first ICI result, and the first signal stored in the first memory circuit 501 has subtracted the ISI result and the first ICI result.

In FIG. 6, the second iteration comprises steps S609-S613. At step S609, the channel estimation circuit 603 estimates the channel according to the second signal and the first signal stored in the first memory circuit 501, which has not subtracted the ISI result and the first ICI result, so as to generate the channel estimation result. In other words, the channel estimation result generated in step S609 is the same as that in step S603.

At step S610, the delay circuit 518 receives the delayed channel estimation result, and sends the delayed channel estimation result to the equalization and decision circuit 515 and the delay circuit 519, the equalization and decision circuit 515 equalizes and decides the first signal (p.s. the first signal has subtracted the ISI and first ICI results) stored in the first memory circuit 501 according to the channel estimation result, so as to generate equalized and decided first signal. The implementation for equalizing and deciding the first signal can be known by the described details related to FIG. 2, thus omitting the redundant descriptions.

Next, at step S611, the delay circuit 519 delays the received channel estimation result, and sends the delayed channel estimation result to the ICI estimation circuit 516 and the delay circuit 520, and the ICI estimation circuit 516 estimates the second ICI result according to the equalized and decided first signal and the channel estimation result. Next, the subtraction circuit 521 subtracts the first ICI result from the second ICI result to obtain a differential value. Next, at step S612, the addition circuit 522 adds the first signal and the differential value of the second ICI result minus the first ICI result, and the first memory circuit 501 updates the first signal to be a calculation value which the first signal adds he differential value of the second ICI result minus the first ICI result, i.e. the first signal is updated to be the calculation result which the stored first signal adds the second ICI result and subtracts the first ICI result. Then, at step S613, the delay circuit 520 delays the received channel estimation result, and sends the delayed channel estimation result to the equalization circuit 517, and the equalization circuit 517 equalizes the first signal stored in the memory circuit 501 according to the channel estimation result.

Herein, the second iteration last estimates the second ICI result, and the first signal stored in the first memory circuit 501 has subtracted not only the ISI result but also the ICI results (i.e. the first and second ICI results). In addition, the first signal stored in the first memory circuit 501 in fact has been processed, such that the output equalized and decided first signal has subtracted the ICI result and the ISI result. Accordingly, the method for processing the OFDM signal in FIG. 6 executed in the pre-echo processing module 5 can efficiently eliminate the ISI and ICI.

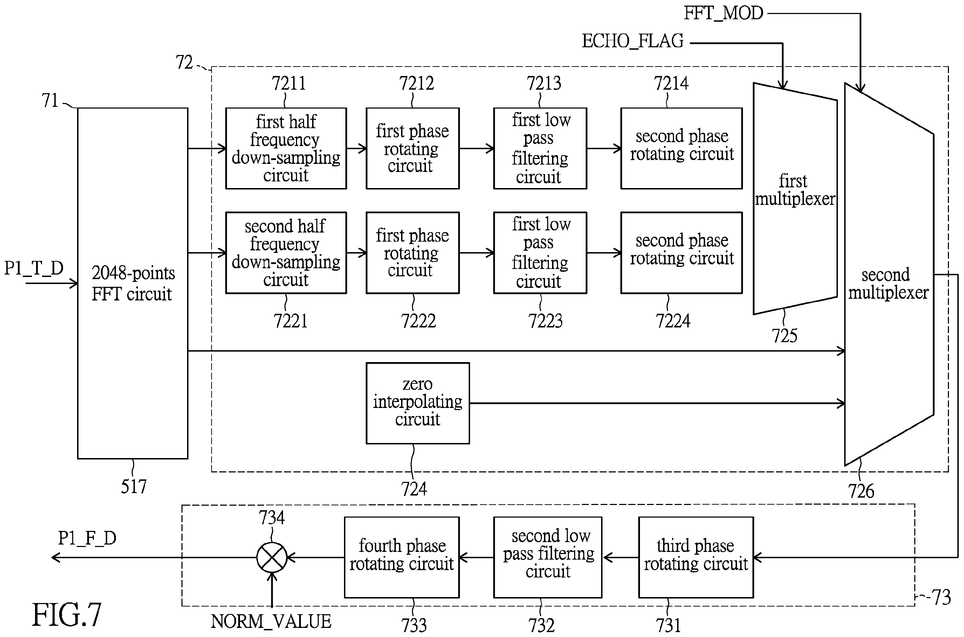

Referring to FIG. 7, FIG. 7 is a block diagram of a device for estimating a specific frequency domain pilot signal according to one exemplary embodiment of the present disclosure. The device 7 for estimating the specific frequency domain pilot signal P1_F_D comprises a 2048-points FFT circuit, a sequence signal processing circuit 72, and a specific frequency domain pilot signal generating circuit 73, wherein the 2048-points FFT circuit is electrically coupled to the sequence signal processing circuit 72, and the sequence signal processing circuit 72 is electrically coupled to the specific frequency domain pilot signal generating circuit.

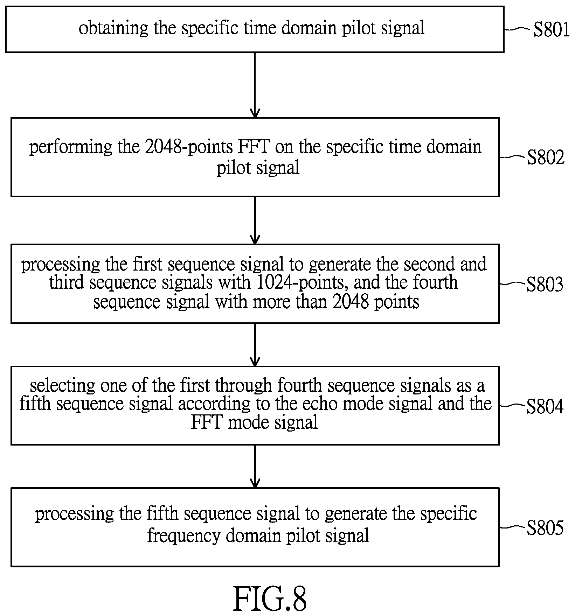

Referring to FIG. 7 and FIG. 8, FIG. 8 is a flow chart of a method for estimating a specific frequency domain pilot signal according to one exemplary embodiment of the present disclosure. At step S801, the 2048-points FFT circuit 71 obtains the specific time domain pilot signal P1_T_D, wherein the generation of the specific time domain pilot signalP1_T_D can be referred to the standard of the DVB system, and for example, DVB-T2 standard specifies how to generate the P1 signal on the time domain. Thus, the present disclosure does not illustrate details related to the generation of the specific time domain pilot signalP1_T_D. Next, at step S802, the 2048-points FFT circuit performs a 2048-points FFT on the specific time domain pilot signal P1_T_D, so as to obtain a first sequence signal with 2048 points. Next, at step S803, the sequence signal processing circuit 72 processes the first sequence signal to generate a second and third sequence signals with 1024-points, and a fourth sequence signal with more than 2048 points. Next, at step S804, the sequence signal processing circuit 72 can select one of the first through fourth sequence signals as a fifth sequence signal according to an echo mode signal ECHO_FLAG and a FFT mode signal FFT_MOD, wherein FFT mode signal indicates the length (i.e. point number) of IFFT adopted in the DVB system. Last, at step S805, the specific frequency domain pilot signal generating circuit processes the fifth sequence signal to generate the specific frequency domain pilot signal P_F_D.

It is noted that, though the specific frequency domain pilot signal P1_F_D can be provided to the method for processing the OFDM signal, the present disclosure does not limit the specific frequency domain pilot signal P1_F_D to be used by the method for processing the OFDM signal. In other words, if the other device or method needs the specific frequency domain pilot signal P1_F_D, the device and method for estimating the specific frequency domain pilot signal can be used.

At step S803, the details how to generate the second through the fourth sequence signals is illustrated as follows. The sequence signal processing circuit 72 a first and second half frequency down-sampling processes on the first sequence signal to obtain a first and second down-sampled sequence signals, wherein the first and second half frequency down-sampling processes are used to acquire signal values respectively of odd and even points associated with the first sequence signal. That is, the first down-sampled sequence signal comprises the signal values of the odd points associated with the first sequence signal, and the second down-sampled sequence signal comprises the signal values of the even points associated with the first sequence signal. Next, the sequence signal processing circuit 72 sequentially performs a first phase rotating process, a first low pass filtering process, and a second phase rotating process on the first and second down-sampled sequence signals to generate the second and third sequence signals with 1024 points respectively. The sequence signal processing circuit 72 further performs a zero interpolating process on the first sequence signal to generate the fourth sequence signal with more than 2048 points (for example, 4096 points).

At step S804, the details how to select one of the first through fourth sequence signals as the fifth signal are illustrated as follows. When the FFT mode signal indicates a 1024-points length of the IFFT is adopted in the DVB system, and the echo mode signal ECHO_FLAG indicates pre-echo processing is adopted, the sequence signal processing circuit 72 selects the second sequence signal as the fifth sequence signal. When the FFT mode signal indicates a 1024-points length of an IFFT is adopted in the DVB system, and the echo mode signal ECHO_FLAG indicates post-echo processing is adopted, the sequence signal processing circuit 72 selects the third sequence signal as the fifth sequence signal. When the FFT mode signal indicates a 2048-points length of an IFFT is adopted in the DVB system, the sequence signal processing circuit 72 selects the first sequence signal as the fifth sequence signal. When the FFT mode signal indicates a more than 2048-points length of an IFFT is adopted in the DVB system, the sequence signal processing circuit 72 selects the fourth sequence signal as the fifth sequence signal.

At step S805, the details how to generate the specific frequency domain pilot signal P1_F_D are illustrated as follows. The specific frequency domain pilot signal generating circuit 73 performs a third phase rotating process, a second low pass filtering process, a fourth phase rotating process, and a norm value multiplying process on the fifth sequence signal to estimate the specific frequency domain pilot signal P1_F_D.

Still referring to FIG. 7, one implementation of the sequence signal processing circuit 72 is illustrated, and the present disclosure does not limit the implementation of the sequence signal processing circuit 72. The sequence signal processing circuit 72 comprises a first and second half frequency down-sampling circuits 7211, 7221, first phase rotating circuits 7212, 7222, first low pass filtering circuits 7213, 7223, second phase rotating circuits 7214, 7224, a zero interpolating circuit 724, and a first and second multiplexer 725, 726. The first and second half frequency down-sampling circuits 7211, 7221 are electrically coupled to the 2048-points FFT circuit 71, and respectively electrically coupled to the first phase rotating circuits 7212, 7222. The first low pass filtering circuits 7213, 7223 are respectively electrically coupled to the first phase rotating circuits 7212, 7222, and further electrically coupled to the second phase rotating circuits 7214, 7224. The first multiplexer 725 is electrically coupled to the second phase rotating circuits 7214, 7224. The zero interpolating circuit 724 is electrically coupled to the 2048-points FFT circuit 71. The second multiplexer 726 is electrically coupled to the first multiplexer 725, the 2048-points FFT circuit 71, the zero interpolating circuit 724, and the specific frequency domain pilot signal generating circuit 73.

The first and second half frequency down-sampling circuits 7211, 7221 respectively perform the first and second half frequency down-sampling processes on the first sequence signal to obtain the first and second down-sampled sequence signals. The first phase rotating circuits 7212, 7222 perform a first phase rotating process respectively on the first and second down-sampled sequence signals, and that is, the first and second down-sampled sequence signals are rotated a first specific phase. The first specific phase in the exemplary embodiment can be 2π·(512/N), wherein N is 2048. The first low pass filtering circuits 7213, 7223 perform a first low pass filtering process on the first and second down-sampled sequence signals rotated the first specific phase to filter the unwanted high frequency noise. The second phase rotating circuits 7214, 7224 perform a second phase rotating process on the first and second down-sampled sequence signals on which the first low pass filtering process is performed, so as to generate the second and third sequence signals, and that is, the first and second down-sampled sequence signals on which the first low pass filtering process is performed are rotated a specific second phase. The first specific phase in the exemplary embodiment can be 2π·(-512/N).

The zero interpolating circuit 724 inserts several zero signal values between even and odd points of the first sequence signal, so as to generate the fourth sequence signal with more than 2048 points. The first multiplexer 725 selects the second or third sequence signal according to the echo mode signal ECHO_FLAG. The second multiplexer 726 selects the output signal of the first multiplexer 725, the first sequence signal, or the fourth sequence signal as the output fifth sequence signal according to the FFT mode signal FFT_MOD.

In addition, one implementation of the specific frequency domain pilot signal generating circuit 73 is illustrated as follows, and the present disclosure does not limit the implementation of the specific frequency domain pilot signal generating circuit 73. The specific frequency domain pilot signal generating circuit 73 comprises a third phase rotating circuit 731, a second low pass filtering circuit 732, a fourth phase rotating circuit 733, and a multiplication circuit 734. The third phase rotating circuit 731 is electrically coupled to the sequence signal processing circuit 72, so as to receive the fifth sequence signal. The second low pass filtering circuit 732 is electrically coupled to the third phase rotating. The fourth phase rotating circuit 733 is electrically coupled to the second low pass filtering circuit 732, and the multiplication circuit 734 is electrically coupled to the fourth phase rotating circuit 733.

The third phase rotating circuit 731 performs the third phase rotating process on the fifth sequence signal, and that is, the fifth sequence signal is rotated a specific third phase. The first specific phase in the exemplary embodiment can be 2π·(1024/N). The second low pass filtering circuit 732 performs a second low pass filtering process on the fifth sequence signal rotated the specific third phase to filter the unwanted high frequency noise. The fourth phase rotating circuit 733 performs the fourth phase rotating process on the fifth sequence signal on which the second low pass filtering process is performed, and that is, the fifth sequence signal on which the second low pass filtering process is performed is rotated a specific fourth phase. The first specific phase in the exemplary embodiment can be 2π·(1024/N). Next, the multiplication circuit 734 performs a norm value multiplication on the fifth sequence signal rotated the specific fourth phase, and that is, the fifth sequence signal rotated the specific fourth phase is multiplied by a norm value NORM_VALUE, so as to generate the specific frequency domain pilot signal P1_F_D.

It is noted that the length of the FFT circuit 71, the lengths of the sequence signals, and the specific phases are illustrated while the DVB system adopts DVB-T2 standard for example, and the person with ordinary skill in the art can design the length of the FFT circuit 71, the lengths of the sequence signals, and the specific phases in the DVB systems with different standards.

To sum up, the exemplary embodiment of the present disclosure provides the method for processing the OFDM signal, which adopts iteration calculation, reliable region decision, pilot aiding decision, merely frequency domain processing, and channel estimation by utilizing two signals to eliminate ISI and ICI, such that the system performance can be enhanced, and executions of several FFTs and IFFTs can be avoided to lower the hardware cost and computation. In addition, the method for processing an OFDM signal can adopt the pre-echo or post-echo processing to eliminate ISI and ICI under different cases, and implementations of the pre-echo processing and the post-echo processing are similar to each other, such that partial components can be used in common, and the hardware cost increases little. Furthermore, the exemplary embodiments of the present disclosure also provide the device and method for estimating the specific frequency domain pilot signal utilized by the method for processing the OFDM.

The above-mentioned descriptions represent merely the exemplary embodiment of the present disclosure, without any intention to limit the present disclosure thereto.

## Claims

1. A method for processing an Orthogonal Frequency Division Multiplexing (OFDM) signal, for eliminating Inter-Symbol Interference (ISI) and Inter-Channel Interference (ICI), which is **characterized in**, the method for processing an OFDM signal comprises:
temporally storing a first signal and a second signal;
receiving an OFDM signal on a frequency domain, updating the second signal to be the OFDM signal on a frequency domain, and updating the first signal to be the last received and processed second signal (FIG. 4, S402);
estimating a channel according to the first signal and the second signal, and generating a channel estimation result (FIG. 4, S403, S409);
when a specific frame enable signal or a specific pilot enable signal is false, estimating an ISI result according to the first signal and the channel estimation result (FIG. 4, S405);
when the specific frame enable signal and the specific pilot enable signal are true, estimating the ISI result according to a specific frequency domain pilot signal and the channel estimation result (FIG. 4, S405);
updating the second or first signal according to the ISI result (FIG. 4, S406);
estimating a first ICI result according to the second signal and the channel estimation result (FIG. 4, S408);
estimating the second ICI result according to the second or first signal, the first ICI result, and the channel estimation result (FIG. 4, S411);
updating the second signal according to the second ICI result to give the received and processed second signal (FIG. 4, S412); and
equalizing the first signal, and outputting the equalized first signal (FIG. 4, S413).

2. The method for processing the OFDM signal according to Claim 1, which is **characterized in**, wherein when an echo mode signal indicates post-echo processing is adopted, the first signal is equalized and decided to generate the equalized and decided first signal and obtain the specific frequency domain pilot signal (FIG. 4, S404); when the specific frame enable signal or the specific pilot enable signal is false, the ISI result is estimated according to the equalized and decided first signal and the channel estimation result (FIG. 4, S405).

3. The method for processing the OFDM signal according to Claim 2, which is **characterized in**, wherein the second signal is updated to be a subtraction result which the second signal subtracts the ISI result (FIG. 4, S406).

4. The method for processing the OFDM signal according to Claim 3, which is **characterized in**, wherein the second signal is equalized and decided (FIG. 4, S407), and the first ICI result is estimated according to the equalized and decided second signal and the channel estimation result (FIG. 4, S408).

5. The method for processing the OFDM signal according to Claim 4, which is **characterized in**, wherein an addition result which the second signal adds the first ICI result is equalized and decided (FIG. 4, S410), and the second ICI result is estimated according to the equalized and decided addition result and the channel estimation result (FIG. 4, S411).

6. The method for processing the OFDM signal according to Claim 5, which is **characterized in**, wherein the second signal is updated to be a subtraction result which the second signal subtracts the second ICI result (FIG. 4, S412).

7. The method for processing the OFDM signal according to Claim 1, which is **characterized in**, wherein steps of estimating the specific frequency domain pilot signal comprises:
obtaining specific time domain pilot signal (FIG. 8, S801);
performing a Fast Fourier Transformation (FFT) on the specific time domain pilot signal to obtain a first sequence signal (FIG. 8, S802);
performing a first and second half frequency down-sampling processes on the first sequence signal to obtain a first and second down-sampled sequence signals (FIG. 8, S803), wherein the first and second half frequency down-sampling processes are used to acquire signal values respectively of odd and even points associated with the first sequence signal;
sequentially performing a first phase rotating process, a first low pass filtering process, and a second phase rotating process on the first and second down-sampled sequence signals to generate a second and third sequence signals respectively (FIG. 8, S803);
performing a zero interpolating process on the first sequence signal to generate a fourth sequence signal (FIG. 8, S803);
selecting one of the first through fourth sequence signals as a fifth sequence signal according to an echo mode signal and a FFT mode signal (FIG. 8, S804); and
sequentially performing a third phase rotating process, a second low pass filtering process, a fourth phase rotating process, and a norm value multiplying process on the fifth sequence signal to estimate the specific frequency domain pilot signal (FIG. 8, S805).

8. The method for processing the OFDM signal according to Claim 7, which is **characterized in**, wherein the method for processing an OFDM signal is used in a receiver of a Digital Video Broadcasting-Second Generation Terrestrial (DVB-T2) system, the specific frequency domain pilot signal is a P1 pilot signal on the frequency domain, and the lengths of the first through fourth sequence signals are 2048 points, 1024 points, 1024 points, and larger than 2048 points.

9. The method for processing the OFDM signal according to Claim 8, which is **characterized in**, wherein a first through fourth phases corresponding the first through fourth phase rotating processes are respectively 2π·(512/N), 2π·(-512/N), 2π·(1024/N), and 2π·(1024/N), wherein N is 2048.

10. The method for processing the OFDM signal according to Claim 8, which is **characterized in**, wherein when the FFT mode signal indicates a 1024-points length of an inversed FFT (IFFT) is adopted in the DVB-T2 system, and the echo mode signal indicates pre-echo processing is adopted, the second sequence signal is selected as the fifth sequence signal (FIG. 8, S804); when the FFT mode signal indicates a 1024-points length of an IFFT is adopted in the DVB-T2 system, and the echo mode signal indicates post-echo processing is adopted, the third sequence signal is selected as the fifth sequence signal (FIG. 8, S804); when the FFT mode signal indicates a 2048-points length of an IFFT is adopted in the DVB-T2 system, the first sequence signal is selected as the fifth sequence signal (FIG. 8, S804); when the FFT mode signal indicates a more than 2048-points length of an IFFT is adopted in the DVB-T2 system, the fourth sequence signal is selected as the fifth sequence signal (FIG. 8, S804).

11. A method for processing an Orthogonal Frequency Division Multiplexing (OFDM) signal, for eliminating Inter-Symbol Interference (ISI) and Inter-Channel Interference (ICI), which is **characterized in**, the method for processing an OFDM signal comprises:
temporally storing a first signal and a second signal;
receiving an OFDM signal on a frequency domain, updating the second signal to be the OFDM signal on a frequency domain, and updating the first signal to be the last received and processed second signal (FIG. 6, S602);
estimating a channel according to the first signal and the second signal, and generating a channel estimation result (FIG. 6, S603, S609);
when a specific frame enable signal or a specific pilot enable signal is false, estimating an ISI result according to the second signal and the channel estimation result (FIG. 6, S605);
when the specific frame enable signal and the specific pilot enable signal are true, estimating the ISI result according to a specific frequency domain pilot signal and the channel estimation result (FIG. 6, S605);
updating the first signal according to the ISI result (FIG. 6, S606);
estimating a first ICI result according to the first signal and the channel estimation result (FIG. 6, S608);
estimating the second ICI result according to the first signal, the first ICI result, and the channel estimation result (FIG. 6, S611);
updating the first signal according to the second ICI result (FIG. 6, S612); and
equalizing the first signal, and outputting the equalized first signal (FIG. 6, S613).

12. The method for processing the OFDM signal according to Claim 11, which is **characterized in**, wherein when an echo mode signal indicates pre-echo processing is adopted, the second signal is equalized and decided to generate the equalized and decided second signal and obtain the specific frequency domain pilot signal (FIG. 6, S604); when the specific frame enable signal or the specific pilot enable signal is false, the ISI result is estimated according to the equalized and decided second signal and the channel estimation result (FIG. 6, S605).

13. The method for processing the OFDM signal according to Claim 12, which is **characterized in**, wherein the first signal is updated to be a subtraction result which the first signal subtracts the ISI result (FIG. 6, S606).

14. The method for processing the OFDM signal according to Claim 13, which is **characterized in**, wherein the first signal is equalized and decided (FIG. 6, S607), the first ICI result is estimated according to the equalized and decided first signal and the channel estimation result, and the first signal is updated to be a subtraction result which the first signal subtracts the first ICI result (FIG. 6, S608).

15. The method for processing the OFDM signal according to Claim 14, which is **characterized in**, wherein the first signal is equalized and decided (FIG. 6, S610), and the second ICI result is estimated according to the equalized and decided first signal and the channel estimation result (FIG. 6, S611).

16. The method for processing the OFDM signal according to Claim 15, which is **characterized in**, wherein the first signal is updated to be a calculation result which the first signal subtracts the first ICI result and adds the second ICI result (FIG. 6. S612).

## Patentansprüche

1. Verfahren zum Verarbeiten eines orthogonalen Frequenzmultiplex (OFDM)-Signals zur Beseitigung von Intersymbolinterferenz (ISI) und Interkanalinterferenz (ICI), **dadurch gekennzeichnet, dass** das Verfahren zum Verarbeiten eines OFDM-Signals umfasst:
temporäres Speichern eines ersten Signals und eines zweiten Signals,
Empfangen eines OFDM-Signals auf einem Frequenzbereich, Aktualisieren des zweiten Signals, um das OFDM-Signal auf einem Frequenzbereich zu sein, und Aktualisieren des ersten Signals, um das zuletzt empfangene und verarbeitete zweite Signal zu sein (Fig. 4, S402),
Schätzen eines Kanals gemäß dem ersten Signal und dem zweiten Signal und Erzeugen eines Kanalschätzergebnisses (Fig. 4, S403, S409),
wenn ein bestimmtes Rahmenfreigabesignal oder ein bestimmtes Pilotfreigabesignal falsch ist, Schätzen eines ISI-Ergebnisses gemäß dem ersten Signal und dem Kanalschätzergebnis (Fig. 4, S405),
wenn das spezifische Rahmenfreigabesignal und das spezifische Pilotfreigabesignal wahr sind, Schätzen des ISI-Ergebnisses gemäß einem spezifischen Frequenzbereichspilotsignal und dem Kanalschätzergebnis (Fig. 4, S405),
Aktualisieren des zweiten oder ersten Signals gemäß dem ISI-Ergebnis (Fig. 4, S406), Schätzen eines ersten ICI-Ergebnisses gemäß dem zweiten Signal und dem Kanalschätzergebnis (Fig. 4, S408),
Schätzen des zweiten ICI-Ergebnisses gemäß dem zweiten oder ersten Signal, dem ersten ICI-Ergebnis und dem Kanalschätzergebnis (Fig. 4, S411),
Aktualisieren des zweiten Signals gemäß dem zweiten ICI-Ergebnis, um das empfangene und verarbeitete zweite Signal zu ergeben (Fig. 4, S412), und
Entzerren des ersten Signals und Ausgeben des entzerrten ersten Signals (Fig. 4, S413).

2. Verfahren zum Verarbeiten des OFDM-Signals nach Anspruch 1, **dadurch gekennzeichnet, dass** wenn ein Echomodussignal anzeigt, dass eine Post-Echo-Verarbeitung angewendet wird, das erste Signal entzerrt und entschieden wird, um das entzerrte und entschiedene erste Signal zu erzeugen und das spezifische Frequenzbereichspilotsignal zu erhalten (Fig. 4, S404), wenn das spezifische Rahmenfreigabesignal oder das spezifische Pilotfreigabesignal falsch ist, wird das ISI-Ergebnis entsprechend dem entzerrten und entschiedenen ersten Signal und dem Kanalschätzergebnis (Fig. 4, S405) geschätzt.

3. Verfahren zum Verarbeiten des OFDM-Signals nach Anspruch 2, **dadurch gekennzeichnet, dass** das zweite Signal als Subtraktionsergebnis, welches das zweite Signal abzüglich dem ISI-Ergebnis ist (Fig. 4, S406), aktualisiert wird.

4. Verfahren zum Verarbeiten des OFDM-Signals nach Anspruch 3, **dadurch gekennzeichnet, dass** das zweite Signal entzerrt und entschieden wird (Figur 4, S407) und das erste ICI-Ergebnis entsprechend dem entzerrten und entschiedenen zweiten Signal und dem Kanalschätzergebnis (Fig. 4, S408) geschätzt wird.

5. Verfahren zum Verarbeiten des OFDM-Signals nach Anspruch 4, **dadurch gekennzeichnet, dass** ein Additionsergebnis, welches das zweite Signal mit dem ersten ICI-Ergebnis addiert ist, entzerrt und entschieden wird (Fig. 4, S410), und das zweite ICI-Ergebnis gemäß dem entzerrten und entschiedenen Additionsergebnis und dem Kanalschätzergebnis (Fig. 4, S411) geschätzt wird.

6. Verfahren zum Verarbeiten des OFDM-Signals nach Anspruch 5, **dadurch gekennzeichnet, dass** das zweite Signal als Subtraktionsergebnis, welches das zweite Signal abzüglich dem zweiten ICI-Ergebnis ist (Fig. 4, S412), aktualisiert wird.

7. Verfahren zum Verarbeiten des OFDM-Signals nach Anspruch 1, **dadurch gekennzeichnet, dass** die Schritte des Schätzens des spezifischen Frequenzbereichspilotsignals umfassen:
Erhalten eines spezifischen Zeitbereichspilotsignals (Fig. 8, S801),
Durchführen einer schnellen Fourier-Transformation (FFT) auf dem spezifischen Zeitbereichspilotsignal, um ein erstes Sequenzsignal zu erhalten (Fig. 8, S802),
Durchführen eines ersten und zweiten Halbfrequenz-Downsamplingprozesses auf dem ersten Sequenzsignal, um ein erstes und zweites downgesampletes Sequenzsignal zu erhalten (Fig. 8, S803), wobei der erste und der zweite Halbfrequenz-Downsamplingprozess verwendet werden, um Signalwerte von ungeraden und geraden Punkten, die dem ersten Sequenzsignal zugeordnet sind, zu erhalten,
sequentielles Durchführen eines ersten Phasenrotationsprozesses, eines ersten Tiefpassfilterprozesses und eines zweiten Phasenrotationsprozesses an dem ersten und dem zweiten downgesampleten Sequenzsignalen, um jeweils ein zweites bzw. ein drittes Sequenzsignal zu erzeugen (Fig. 8, S803),
Durchführen eines Null-Interpolationsprozesses auf dem ersten Sequenzsignal, um ein viertes Sequenzsignal zu erzeugen (Fig. 8, S803),
Auswählen eines des ersten bis vierten Sequenzsignals als ein fünftes Sequenzsignal gemäß einem Echomodussignal und einem FFT-Modus-Signal (Fig. 8, S804), und
sequentielles Durchführen eines dritten Phasenrotationsprozesses, eines zweiten Tiefpassfilterprozesses, eines vierten Phasenrotationsprozesses und eines Normwertvervielfachungsprozesses auf dem fünften Sequenzsignal, um das spezifische Frequenzbereichspilotsignal zu schätzen (Fig. 8, S805).

8. Verfahren zum Verarbeiten des OFDM-Signals nach Anspruch 7, **dadurch gekennzeichnet, dass** das Verfahren zur Verarbeitung eines OFDM-Signals in einem Empfänger eines Digital Video Broadcasting-Second Generation Terrestrial (DVB-T2) - Systems verwendet wird, wobei das Frequenzbereichspilotsignal ein P1-Pilotsignal auf dem Frequenzbereich ist und die Längen der ersten bis vierten Sequenzsignale 2048 Punkte, 1024 Punkte, 1024 Punkte und größer als 2048 Punkte sind.

9. Verfahren zum Verarbeiten des OFDM-Signals nach Anspruch 8, **dadurch gekennzeichnet, dass** eine erste bis vierte Phase, die den ersten bis vierten Phasenrotationsvorgängen entspricht, jeweils 2π (512/N), 2π (-512/N), 2π (1024/N) und 2π (1024/N) sind, wobei N 2048 beträgt.

10. Verfahren zum Verarbeiten des OFDM-Signals nach Anspruch 8, **dadurch gekennzeichnet, dass** wenn das FFT-Modus-Signal anzeigt, dass eine 1024-Punkte-Länge eines invertierten FFT (IFFT) in dem DVB-T2-System angewendet wird und das Echomodussignal anzeigt, dass Vor-Echo-Verarbeitung angewendet wird, das zweite Sequenzsignal als das fünfte Sequenzsignal (Fig. 8, S804) ausgewählt wird, und dass wenn das FFT-Modus-Signal anzeigt, dass eine 1024-Punkte-Länge eines IFFT in dem DVB-T2-System angewendet wird und das Echomodussignal anzeigt, dass Post-Echo-Verarbeitung angewendet wird, das dritte Sequenzsignal als das fünfte Sequenzsignal ausgewählt (Fig. 8, S804) wird, und dass wenn das FFT-Modus-Signal anzeigt, dass eine 2048-Punkte-Länge einer IFFT in dem DVB-T2-System angewendet wird, das erste Sequenzsignal als das fünfte Sequenzsignal (Fig. 8, S804) angewendet wird, und dass wenn das FFT-Modus-Signal anzeigt, dass eine Länge von mehr als 2048 Punkten einer IFFT in dem DVB-T2-System angewendet wird, wird das vierte Sequenzsignal als das fünfte Sequenzsignal (Fig. 8, S804) ausgewählt wird.

11. Verfahren zum Verarbeiten eines orthogonalen Frequenzmultiplex (OFDM)-Signals zur Beseitigung von Intersymbolinterferenz (ISI) und Interkanalinterferenz (ICI), **dadurch gekennzeichnet, dass** das Verfahren zur Verarbeitung eines OFDM-Signals umfasst:
temporäres Speichern eines ersten Signals und eines zweiten Signals,
Empfangen eines OFDM-Signals auf einem Frequenzbereich, Aktualisieren des zweiten Signals, um das OFDM-Signal auf einem Frequenzbereich zu sein, und Aktualisieren des ersten Signals, um das zuletzt empfangene und verarbeitete zweite Signal zu sein (Fig. 6, S602),
Schätzen eines Kanals gemäß dem ersten Signal und dem zweiten Signal und Erzeugen eines Kanalschätzergebnisses (Fig.6, S603, S609),
wenn ein bestimmtes Rahmenfreigabesignal oder ein bestimmtes Pilotfreigabesignal falsch ist, Schätzen eines ISI-Ergebnisses gemäß dem zweiten Signal und dem Kanalschätzergebnis (Fig. 6, S605),
wenn das spezifische Rahmenfreigabesignal und das spezifische Pilotfreigabesignal wahr sind, Schätzen des ISI-Ergebnisses gemäß einem spezifischen Frequenzbereichspilotsignal und dem Kanalschätzergebnis (Fig. 6, S605),
Aktualisieren des ersten Signals gemäß dem ISI-Ergebnis (Fig. 6, S606),
Schätzen eines ersten ICI-Ergebnisses gemäß dem ersten Signal und dem Kanalschätzergebnis (Fig. 6, S608),
Schätzen des zweiten ICI-Ergebnisses gemäß dem ersten Signal, dem ersten ICI-Ergebnis und dem Kanalschätzergebnis (Fig. 6, S611),
Aktualisieren des ersten Signals gemäß dem zweiten ICI-Ergebnis (Fig. 6, S612), und
Entzerren des ersten Signals und Ausgeben des entzerrten ersten Signals (Fig. 6, S613).

12. Verfahren zum Verarbeiten eines orthogonalen Frequenzmultiplex (OFDM)-Signals nach Anspruch 11, **dadurch gekennzeichnet, dass** wenn eine Vor-Echo-Verarbeitung angewendet wird, das zweite Signal entzerrt und entschieden wird, um das entzerrte und entschiedene erste Signal zu erzeugen und das spezifische Frequenzbereichspilotsignal zu erhalten (Fig. 6, S604), und dass wenn das spezifische Rahmenfreigabesignal oder das spezifische Pilotfreigabesignal falsch ist, das ISI-Ergebnis gemäß dem entzerrten und entschiedenen zweiten Signal und dem Kanalschätzergebnis (Fig. 6, S605) geschätzt wird.

13. Verfahren zur Verarbeitung des OFDM-Signals nach Anspruch 12, **dadurch gekennzeichnet, dass** das erste Signal als Subtraktionsergebnis, welches das ISI-Ergebnis subtrahiert von dem ersten Signal (Fig. 6, S606) ist, aktualisiert wird.

14. Verfahren zur Verarbeitung des OFDM-Signals nach Anspruch 13, **dadurch gekennzeichnet, dass** das erste Signal entzerrt und entschieden wird (Fig. 6, S607), das erste ICI-Ergebnis gemäß dem entzerrten und entschiedenen ersten Signal und dem Kanalschätzergebnis geschätzt und das erste Signal aktualisiert wird, um ein Subtraktionsergebnis, welches das erste ICI-Ergebnis subtrahiert von dem ersten Signal (Fig. 6, S608) ist, zu sein.

15. Verfahren zur Verarbeitung des OFDM-Signals nach Anspruch 14, **dadurch gekennzeichnet, dass** das erste Signal entzerrt und entschieden wird (Fig. 6, S610) und das zweite ICI-Ergebnis entsprechend dem entzerrten und entschiedenen ersten Signal und dem Kanalschätzergebnis (Fig. 6, S611) geschätzt wird.

16. Verfahren zur Verarbeitung des OFDM-Signals nach Anspruch 15, **dadurch gekennzeichnet, dass** das erste Signal als Berechnungsergebnis, welches das erste ICI-Ergebnis von dem ersten Signal subtrahiert und das zweite ICI-Ergebnis zu dem ersten Signal addiert (Fig. 6, S612), ist.

## Revendications

1. Procédé de traitement d'un signal de multiplexage par répartition orthogonale de la fréquence (OFDM), permettant d'éliminer le brouillage entre symboles (ISI) et le brouillage entre canaux (ICI), **caractérisé en ce que** le procédé de traitement de signal de multiplexage OFDM comporte les étapes ci-dessous consistant à :
stocker temporairement un premier signal et un deuxième signal ;
recevoir un signal de multiplexage OFDM sur un domaine fréquentiel, mettre à jour le deuxième signal afin qu'il corresponde au signal de multiplexage OFDM sur un domaine fréquentiel, et mettre à jour le premier signal afin qu'il corresponde au deuxième signal reçu et traité en dernier (FIG. 4, S402) ;
estimer un canal selon le premier signal et le deuxième signal, et générer un résultat d'estimation de canal (FIG. 4, S403, S409) ;
lorsqu'un signal d'activation de trame spécifique ou un signal d'activation de pilote spécifique présente la valeur « faux », estimer un résultat de brouillage ISI selon le premier signal et le résultat d'estimation de canal (FIG. 4, S405) ;
lorsque le signal d'activation de trame spécifique et le signal d'activation de pilote spécifique présentent la valeur « vrai », estimer le résultat de brouillage ISI selon un signal pilote de domaine fréquentiel spécifique et le résultat d'estimation de canal (FIG. 4, S405) ;
mettre à jour le second signal ou le premier signal selon le résultat de brouillage ISI (FIG. 4, S406) ;
estimer un premier résultat de brouillage ICI selon le deuxième signal et le résultat d'estimation de canal (FIG. 4, S408) ;
estimer le second résultat de brouillage ICI selon le second signal ou le premier signal, le premier résultat de brouillage ICI, et le résultat d'estimation de canal (FIG. 4, S411) ;
mettre à jour le deuxième signal selon le second résultat de brouillage ICI pour donner le deuxième signal traité et reçu (FIG. 4, S412) ; et
égaliser le premier signal et délivrer en sortie le premier signal égalisé (FIG. 4, S413).

2. Procédé de traitement du signal de multiplexage OFDM selon la revendication 1, **caractérisé en ce que**, lorsqu'un signal de mode écho indique qu'un traitement post-écho est adopté, le premier signal est égalisé et déterminé pour générer le premier signal déterminé et égalisé et obtenir le signal pilote de domaine fréquentiel spécifique (FIG. 4, S404) ; et lorsque le signal d'activation de trame spécifique ou le signal d'activation de pilote spécifique présente la valeur « faux », le résultat de brouillage ISI est estimé selon le premier signal déterminé et égalisé et le résultat d'estimation de canal (FIG. 4, S405).

3. Procédé de traitement du signal de multiplexage OFDM selon la revendication 2, **caractérisé en ce que** le deuxième signal est mis à jour de manière à correspondre à un résultat de soustraction dans lequel le deuxième signal soustrait le résultat de brouillage ISI (FIG. 4, S406).

4. Procédé de traitement du signal de multiplexage OFDM selon la revendication 3, **caractérisé en ce que** le deuxième signal est égalisé et déterminé (FIG. 4, S407), et le premier résultat de brouillage ICI est estimé selon le deuxième signal déterminé et égalisé et le résultat d'estimation de canal (FIG. 4, S408).

5. Procédé de traitement du signal de multiplexage OFDM selon la revendication 4, **caractérisé en ce qu'**un résultat d'addition, dans lequel le deuxième signal ajoute le premier résultat de brouillage ICI, est égalisé et déterminé (FIG. 4, S410), et le second résultat de brouillage ICI est estimé selon le résultat d'addition déterminé et égalisé et le résultat d'estimation de canal (FIG. 4, S411).

6. Procédé de traitement du signal de multiplexage OFDM selon la revendication 5, **caractérisé en ce que** le deuxième signal est mis à jour de manière à correspondre à un résultat de soustraction dans lequel le deuxième signal soustrait le second résultat de brouillage ICI (FIG. 4, S412).

7. Procédé de traitement du signal de multiplexage OFDM selon la revendication 1, **caractérisé par** les étapes d'estimation du signal pilote de domaine fréquentiel spécifique ci-dessous consistant à :
obtenir un signal pilote de domaine temporel spécifique (FIG. 8, S801) ;
mettre en oeuvre une transformée de Fourier rapide (FFT) sur le signal pilote de domaine temporel spécifique en vue d'obtenir un premier signal de séquence (FIG. 8, S802) ;
mettre en oeuvre des premier et deuxième processus de sous-échantillonnage à demi-fréquence sur le premier signal de séquence en vue d'obtenir des premier et deuxième signaux de séquence sous-échantillonnés (FIG. 8, S803), dans lequel les premier et deuxième processus de sous-échantillonnage à demi-fréquence sont utilisés pour acquérir des valeurs de signal, respectivement, de points impairs et pairs associés au premier signal de séquence ;
mettre en oeuvre, séquentiellement, un premier processus de rotation de phase, un premier processus de filtrage passe-bas, et un deuxième processus de rotation de phase, sur les premier et deuxième signaux de séquence sous-échantillonnés, en vue de générer des deuxième et troisième signaux de séquence, respectivement (FIG. 8, S803) ;
mettre en oeuvre un processus d'interpolation de valeurs nulles sur le premier signal de séquence, en vue de générer un quatrième signal de séquence (FIG. 8, S803) ;
sélectionner l'un des premier à quatrième signaux de séquence en tant qu'un cinquième signal de séquence selon un signal de mode écho et un signal de mode de transformée FFT (FIG. 8, S804) ; et
mettre en oeuvre, séquentiellement, un troisième processus de rotation de phase, un deuxième processus de filtrage passe-bas, un quatrième processus de rotation de phase et un processus de multiplication de valeurs de normes sur le cinquième signal de séquence en vue d'estimer le signal pilote de domaine fréquentiel spécifique (FIG. 8, S805).

8. Procédé de traitement du signal de multiplexage OFDM selon la revendication 7, **caractérisé en ce que** le procédé de traitement d'un signal de multiplexage OFDM est utilisé dans un récepteur d'un système de radiodiffusion vidéonumérique terrestre de seconde génération (DVB-T2), le signal pilote de domaine fréquentiel spécifique est un signal pilote P1 sur le domaine fréquentiel, et les longueurs des premier à quatrième signaux de séquence sont respectivement de 2 048 points, 1 024 points, 1 024 points, et supérieures à 2 048 points.

9. Procédé de traitement du signal de multiplexage OFDM selon la revendication 8, **caractérisé en ce que** les première à quatrième phases correspondant aux premier à quatrième processus de rotation de phase sont respectivement de 2π*(512/N), 2π*(-512/N), 2π*(1 024/N) et 2π*(1 024/N), où N est égal à 2 048.

10. Procédé de traitement du signal de multiplexage OFDM selon la revendication 8, **caractérisé en ce que**, lorsque le signal de mode de transformée FFT indique qu'une longueur de 1 024 points d'une transformée FFT inverse (IFFT) est adoptée dans le système DVB-T2, et lorsque le signal de mode écho indique qu'un traitement de pré-écho est adopté, le deuxième signal de séquence est sélectionné en tant que le cinquième signal de séquence (FIG. 8, S804) ; lorsque le signal de mode de transformée FFT indique qu'une longueur de 1 024 points d'une transformée IFFT est adoptée dans le système DVB-T2, et lorsque le signal de mode écho indique qu'un traitement post-écho est adopté, le troisième signal de séquence est sélectionné en tant que le cinquième signal de séquence (FIG. 8, S804) ; lorsque le signal de mode de transformée FFT indique qu'une longueur de 2 048 points d'une transformée IFFT est adoptée dans le système DVB-T2, le premier signal de séquence est sélectionné en tant que le cinquième signal de séquence (FIG. 8, S804) ; lorsque le signal de mode de transformée FFT indique qu'une longueur supérieure à 2 048 points d'une transformée IFFT est adoptée dans le système DVB-T2, le quatrième signal de séquence est sélectionné en tant que le cinquième signal de séquence (FIG. 8, S804).

11. Procédé de traitement d'un signal de multiplexage par répartition orthogonale de la fréquence (OFDM), permettant d'éliminer le brouillage entre symboles (ISI) et le brouillage entre canaux (ICI), **caractérisé en ce que** le procédé de traitement de signal de multiplexage OFDM comporte les étapes ci-dessous consistant à :
stocker temporairement un premier signal et un deuxième signal ;
recevoir un signal de multiplexage OFDM sur un domaine fréquentiel, mettre à jour le deuxième signal afin qu'il corresponde au signal de multiplexage OFDM sur un domaine fréquentiel, et mettre à jour le premier signal afin qu'il corresponde au deuxième signal reçu et traité en dernier (FIG. 6, S602) ;
estimer un canal selon le premier signal et le deuxième signal, et générer un résultat d'estimation de canal (FIG. 6, S603, S609) ;
lorsqu'un signal d'activation de trame spécifique ou un signal d'activation de pilote spécifique présente la valeur « faux », estimer un résultat de brouillage ISI selon le second signal et le résultat d'estimation de canal (FIG. 6, S605) ;
lorsque le signal d'activation de trame spécifique et le signal d'activation de pilote spécifique présentent la valeur « vrai », estimer le résultat de brouillage ISI selon un signal pilote de domaine fréquentiel spécifique et le résultat d'estimation de canal (FIG. 6, S605) ;
mettre à jour le premier signal selon le résultat de brouillage ISI (FIG. 6, S606) ;
estimer un premier résultat de brouillage ICI selon le premier signal et le résultat d'estimation de canal (FIG. 6, S608) ;
estimer le second résultat de brouillage ICI selon le premier signal, le premier résultat de brouillage ICI, et le résultat d'estimation de canal (FIG. 6, S611) ;
mettre à jour le premier signal selon le second résultat de brouillage ICI (FIG. 6, S612) ; et
égaliser le premier signal et délivrer en sortie le premier signal égalisé (FIG. 6, S613).

12. Procédé de traitement du signal de multiplexage OFDM selon la revendication 11, **caractérisé en ce que**, lorsqu'un signal de mode écho indique qu'un traitement post-écho est adopté, le deuxième signal est égalisé et déterminé pour générer le deuxième signal déterminé et égalisé et obtenir le signal pilote de domaine fréquentiel spécifique (FIG. 6, S604); et lorsque le signal d'activation de trame spécifique ou le signal d'activation de pilote spécifique présente la valeur « faux », le résultat de brouillage ISI est estimé selon le deuxième signal déterminé et égalisé et le résultat d'estimation de canal (FIG. 6, S605).

13. Procédé de traitement du signal de multiplexage OFDM selon la revendication 12, **caractérisé en ce que** le premier signal est mis à jour de manière à correspondre à un résultat de soustraction dans lequel le premier signal soustrait le résultat de brouillage ISI (FIG. 6, S606).

14. Procédé de traitement du signal de multiplexage OFDM selon la revendication 13, **caractérisé en ce que** le premier signal est égalisé et déterminé (FIG. 6, S607), le premier résultat de brouillage ICI est estimé selon le premier signal déterminé et égalisé et le résultat d'estimation de canal, et le premier signal est mis à jour de manière à correspondre à un résultat de soustraction dans lequel le premier signal soustrait le premier résultat de brouillage ICI (FIG. 6, S608).

15. Procédé de traitement du signal de multiplexage OFDM selon la revendication 14, **caractérisé en ce que** le premier signal est égalisé et déterminé (FIG. 6, S610), et le second résultat de brouillage ICI est estimé selon le premier signal déterminé et égalisé et le résultat d'estimation de canal (FIG. 6, S611).

16. Procédé de traitement du signal de multiplexage OFDM selon la revendication 15, **caractérisé en ce que** le premier signal est mis à jour de manière à correspondre à un résultat de calcul dans lequel le premier signal soustrait le premier résultat de brouillage ICI et ajoute le second résultat de brouillage ICI (FIG. 6, S612).
